# EUROPÄISCHE PATENTSCHRIFT

(11) **EP 0 489 940 B1**
(45) Veröffentlichungstag und Bekanntmachung des Hinweises auf die Patenterteilung: **18.05.1994**
(21) Anmeldenummer: 90123575.4
(22) Anmeldetag: 07.12.1990
(51) Int. Cl.: H02K 5/14, H02K 23/66

(54) **Bürstensystem für einen Kommutatormotor**
Brush system for a commutator motor
Système de balais pour un moteur à collecteur

(43) Veröffentlichungstag der Anmeldung: 17.06.1992
(73) Patentinhaber: SIEMENS AKTIENGESELLSCHAFT, 80333 München (DE)
(72) Erfinder: Burkert, Wolf-Dieter, Dipl.-Ing., W-8000 München 2 (DE); Gleixner, Ronald, Dipl--Ing. (FH), W-8703 Ochsenfurt (DE); Rohm, Hans, Dipl.-Ing., W-6973 Boxberg (DE); Zeisner, Pius, Dipl.-Ing. (FH), W-8725 Arnstein (DE)

(56) Entgegenhaltungen:
- DE-A- 3 138 047
- DE-A- 3 823 404
- US-A- 4 110 651

## Beschreibung

Die Erfindung bezieht sich auf ein Bürstensystem für einen Kommutatormotor gemäß Oberbegriff des Anspruchs 1; ein derartiges Bürstensystem ist aus der DE-C1 36 32 594 bekannt.

Im bekannten vorgenannten Fall ist in das kommutatorseitige Ende des Motorgehäuses eine an dessen Innenwandung anliegende Isolierhülse eingeschoben, die in ihrer axialen Länge zumindest den Kommutatorbereich übergreift. In die Isolierhülse ist eine Bürstentragplatte axial eingesetzt, an der den Kommutator beschleifende Bürsten gehaltert sind und in die nach außen aus dem im fertigen Montagezustand durch einen Lagerdeckel geschlossenen Motorgehäuse herausragende Steckerkontakte zum Anschluß äußerer elektrischer Versorgungsleitungen an die Bürstenanschlüsse fest eingespritzt sind.

Durch die DE-A-31 38 047 ist ein zweiteiliges Motorgehäuse mit einer außen direkt an einem ersten Motorgehäuseteil anliegenden Bürstentragplatte und darauf gehaltener Schaltplatine bekannt; in Nachbarschaft zu dieser Schaltplatine ist ein sich radial zwischen den Wandungen eines zweiten Motorgehäuseteils erstreckendes und an diesem anliegendes Richtteil aus isolierendem Material vorgesehen, um Klemmen eines axial vorliegenden, an radial in den Motorgehäusemantel angeformten Haltearmen befestigten Schalters mit Kontakten der Schaltplatine in Berührung zu bringen.

Ausgehend von einem Bürstensystem der eingangs genannten Art kann ein mit einfachen Mitteln und mit wenigen unterschiedlichen Bauteilen an verschiedene äußere Versorgungsanschluß-Figurationen und verschiedene innere Bauteile-Bestückungen anpaßbares Universal-Bürstensystem erfindungsgemäß durch die Lehre des Anspruchs 1 erreicht werden; vorteilhafte Ausgestaltungen der Erfindung sind jeweils Gegenstand der Unteransprüche.

Die erfindungsgemäße Konstruktion erlaubt z.B. bei sonst gleichen Bauteilen des Bürstensystems eine Anpassung an unterschiedliche äußere Versorgungsanschluß-Figurationen und/oder an unterschiedliche Bestückungen der Bürstenplatte, z.B. mit Entstörmitteln, lediglich durch entsprechend spezifische Ausgestaltung der von dem Isolierkörper-Wandteil aufzunehmenden Kontaktverbindungen und/oder Bürstentragplatte.

Soll z.B. zur Drehzahlregelung des Elektromotors eine entsprechende Elektronik zur Drehzahlerfassung bzw. Drehzahlregelung vorgesehen werden, so ist zweckmäßigerweise nach einer Ausgestaltung der Erfindung zusätzlich eine in axialem Abstand zur Bürstentragplatte ebenfalls axial in den hülsenförmigen Isolierkörper einfügbare und über Kontaktbeine einer weiteren Kontaktebene des Isolierkörper-Wandteils kontaktiertbare Elektronik-Anschlußplatte mit ebenfalls individueller Bestückungsmöglichkeit leicht montier- und anschließbar.

Zweckmäßigerweise sind derart abgewinkelte Kontaktbeine an den aus dem Isolierkörper-Wandteil herausragenden Enden der Kontaktverbindungen vorgesehen, daß die korrespondierenden Gegenkontakte auf der Bürstentragplatte bzw. der Elektronik-Anschlußplatte in Form von Kontaktbuchsen beim axialen Einfügen der Bürstentragplatte bzw. der Elektronik-Anschlußplatte auf die Kontaktbeine steckbar sind. Die äußeren freien Enden der in dem Isolierkörper-Wandteil gehaltenen Kontaktverbindungen sind nach Ausgestaltungen der Erfindung, insbesondere in Anpassung an verschiedene kundenspezifische Anschlußmöglichkeiten äußerer Versorgungsleitungen, entweder als aus dem Motorgehäuse herausgeführte oder in ein an das Motorgehäuse angeblocktes Getriebegehäuse führende Steckerkontakte ausgebildet.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen
- FIG 1: in einem axialen Teilschnittbild einen Kommutatormotor mit angeblocktem Getriebegehäuse
- FIG 2: eine radiale Draufsicht auf die Innenseite des Isolierkörper-Wandteils gemäß FIG 1
- FIG 3: eine tangentiale Draufsicht auf eine Alternative zu dem in FIG 1 vorgesehenen Isolierkörper-Wandteil.

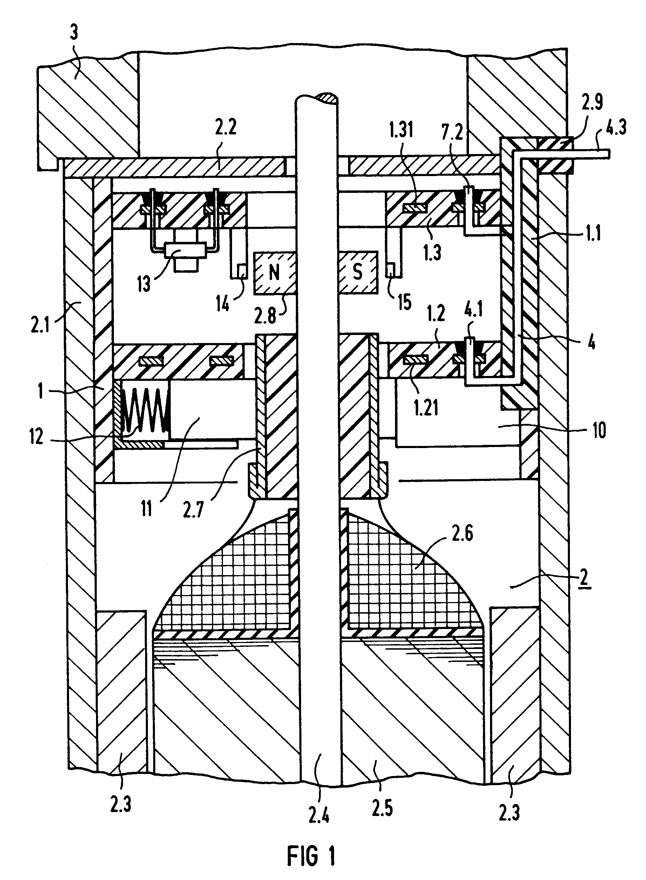

FIG 1 zeigt in einem Teilschnittbild einen Kommutatormotor 2 mit einem Motorgehäuse 2.1 mit an dessen Innenseite gehaltenen Dauermagneten 2.3;2.3 und mit einer Rotorwelle 2.4 mit darauf befestigtem Rotorbleckpaket 2.5, das eine an einen Kommutator 2.7 angeschlossene Rotorwicklung 2.6 aufnimmt. An die obere Stirnseite des Motorgehäuses 2.1 ist unter Zwischenlage einer Flachdichtung 2.2 ein Getriebegehäuse 3 angeblockt, in das die Rotorwelle 2.4 mit einem verlängerten Antriebsende hineinragt.

In das Motorgehäuse 2.1 ist von der kommutatorseitigen Stirnseite her ein an der Innenwandung des Motorgehäuses 2.1 anliegender, in vorteilhafter Weise als Vormontageteil bestückter, Isolierkörper 1 eingeschoben und in seiner Betriebsendlage fixiert. In einen in der Wand des Isolierkörpers 1 vorgesehenen stirnseitig offenen Ausschnitt ist ein eingepaßtes Isolier-Wandteil 1.1 axial eingefügt, das Kontaktverbindungen 4-9 aufnimmt.

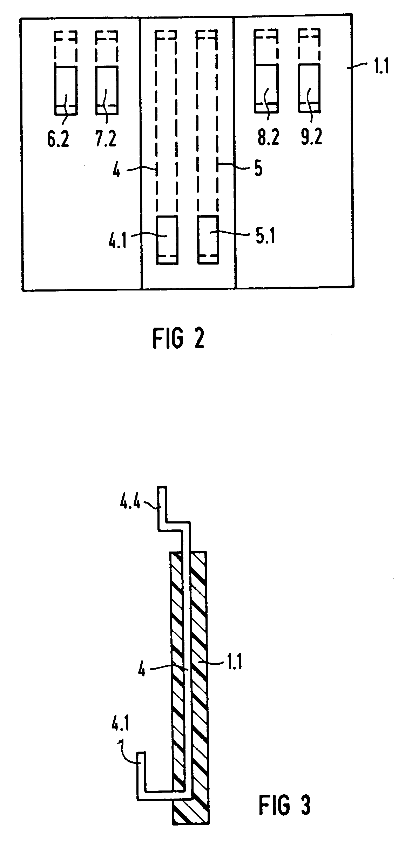

Zur Vormontage des Isolierkörpers 1 wird dieser sowohl mit dem die Kontaktbahnen aufnehmenden Isolierkörper-Wandteil 1.1 als auch mit einer Bürstentragplatte 1.2 sowie einer Elektronik-Anschlußplatte 1.3 bestückt. Dazu ist zunächst das Isolierkörper-Wandteil 1.1 in den korrespondierenden Wandausschnitt des Isolierkörpers 1 axial eingefügt. Der Isolierkörper-Wandteil 1.1 nimmt - wie z.B. aus FIG 2 ersichtlich - sechs Kontaktverbindungen 4-9 zwischen inneren Motoranschlüssen bzw. bestückten elektrischen Bauteilen und äußeren elektrischen Versorgungs- bzw. Steuerleitungen auf.

Im Schnittbild gemäß FIG 1 ist eine in den Isolierkörper-Wandteil 1.1 eingespritzte Kontaktverbindung 4 vollständig ersichtlich, die mit einem abgewinkelten Kontaktbein 4.1 in einer unteren Kontaktebene aus dem Isolierkörper-Wandteil 1.1 herausragt. Zum äußeren Anschluß, z.B. eines kundenspezifischen Steckers für eine äußere Versorgungsleitung, ragt aus dem Isolierkörper-Wandteil 1.1 ein Steckerkontakt 4.3 der Kontaktverbindung 4 aus dem Motorgehäuse 2.1 heraus. Die aus dem Motorgehäuse 2.1 herausragenden Steckerkontakte sind mit einer Dichtung 2.9 umspritzt, die im vorliegenden Fall zwischen der Stirnseite des Motorgehäuses 2.1 und einem angeblockten Getriebegehäuse 3 dichtend einquetschbar ist.

Zur weiteren Bestückung des vormontierten Isolierkörpers 1 sind nach dem axialen Einfügen des Isolierkörper-Wandteils 1.1 als zuvor bestückte Bauteile eine Bürstentragplatte 1.2 und danach in axialem Abstand eine Elektronik-Anschlußplatte 1.3 eingefügt und in ihrer Betriebsendlage, z.B. durch einen Rastverschluß und/oder eine Ultraschall-Verschweißung, fixiert.

Auch die Bürstentragplatte 1.2 bzw. die Elektronik-Anschlußplatte 1.3 sind vor dem axialen Einfügen in den Isolierkörper 1 bereits bestückt. So sind z.B. an der Unterseite der Bürstentragplatte 1.2 Bürsten 11 mit Bürstenandruckfedern 12 aufnehmende Bürstenkästen 10 fixiert und elektrische Bürstenanschlüsse mit Kontaktbahnen eines als Verbindungsmittel in die Bürstentragplatte 1.2 eingegossenen Stanzgitters 1.21 in hier nicht näher dargestellter Weise kontaktiert. Die Kontaktgabe elektrischer Bauteile bzw. elektrischer Anschlüsse untereinander durch ein Stanzgitter ist an sich bekannt. Ein derartiges Stanzgitter weist vor dem Eingießen in die Bürstentragplatte 1.2 Verbindungsstege zwischen Kontaktbahnen zu deren örtlicher Vor-Positionierung auf, die nach dem Einguß in die Bürstentragplatte 1.2 freistanzbar sind. Zum Anschluß der in FIG 1 vollständig ersichtlichen Kontaktbahn 4 und den elektrischen Verbindungen der Bürstentragplatte 1.2 bildet das Stanzgitter 1.21 - wie im rechten Teil der Bürstentragplatte 1.2 in FIG 1 ersichtlich - eine Buchse, die beim axialen Einfügen der Bürstentragplatte 1.2 in den Isolierkörper 1 auf das axial hochgebogene Kontaktbein 4.1 der Kontaktbahn 4 aufsteckbar ist. Zur endgültigen elektrischen Kontaktierung zwischen dem Kontaktbein 4.1 einerseits und der vom Stanzgitter 1.21 gebildeten Buchse andererseits ist einer Verlötung, z.B. durch Mikroflamm-Löten bzw. Hubtauch-Löten vorgesehen.

In ähnlicher Weise wie die Bürstentragplatte 1.2 ist auch die Elektronik-Anschlußplatte 1.3 vor ihrem axialen Einfügen in den Isolierkörper 1, z.B. durch Einstecken in Buchsen eines Stanzgitters 1.31 und anschließendes Verlöten, mit z.B. einem Widerstand 13 bzw. mit Hallwandlern 14 bzw. 15 bestückt, die einem auf der Rotorwelle befestigten Magnetrad 2.8 zur Drehzahlerfassung zugeordnet sind. Zur elektrischen Verbindung zwischen der Elektronik-Anschlußplatte 1.3 und den äußeren Versorgungsanschlüssen dienen in einer oberen Kontaktebene Kontaktbeine 6.2-9.2, von denen in FIG 1 nur das abgebogene Kontaktbein 7.2 sichtbar ist, das in eine Kontaktbuchse des Stanzgitters 1.31 beim axialen Einfügen der Elektronik-Anschlußplatte 1.3 eintaucht.

Zum äußeren kundenspezifischen Verbinden der Kontaktbahnen mit einem äußeren Anschlußstecker weist gemäß FIG 1 die Kontaktbahn 4 einen aus dem Motorgehäuse 2.1 herausragenden Anschlußstecker 4.3 auf. Dieser Anschlußstecker 4.3 liegt zweckmäßigerweise in einer korrespondierenden Ebene mit Anschlußsteckern weiterer Kontaktverbindungen. Sämtliche Anschlußstecker sind durch eine umspritzte Dichtung 2.9 zwischen der Stirnseite des Motorgehäuses 2.1 und dem angeblockten Getriebegehäuse 2.9 dichtend eingeschlossen.

FIG 2 zeigt eine radiale Draufsicht auf die Innenseite eines Isolierkörper-Wandteils 1.1 mit zwei der Bürstentragplatte 1.2 zugeordneten Kontaktbeinen 4.1 bzw. 5.1 in der unteren Kontaktebene und insgesamt sechs, der Elektronik-Anschlußplatte 1.3 zugeordneten Kontaktbeinen 6.2-9.2 in der oberen Kontaktebene.

FIG 3 zeigt alternativ zu dem Isolierkörper-Wandteil 1.1 in FIG 1 mit einem nach außen aus dem Motorgehäuse 2.1 herausgeführten Anschlußstecker 4.3 einen Isolierkörper-Wandteil 1.1 mit einer innerhalb des angeblockten Getriebegehäuses 3 führenden Steckerkontakt 4.4, an den dann ein in das Getriebegehäuse eintauchender kundenspezifischer Stecker für eine äußere elektrische Versorgungsleitung einführbar ist.

## Patentansprüche

1. Bürstensystem für einen Kommutatormotor mit einem in dessen Motorgehäuse (2.1) axial einfügbaren hülsenförmigen Isolierkörper (1) und daran gehaltener, axial einfügbarer Bürstentragplatte (1.2) mit Kontaktverbindungen (4-9) zumindest zwischen den Bürstenanschlüssen und äußeren elektrischen Versorgungsanschlüssen, **dadurch gekennzeichnet,** daß die Kontaktverbindungen (4-9) in einem axial in einen korrespondierenden Ausschnitt des Isolierkörpers (1) einfügbaren Isolierkörper-Wandteil (1.1) gehalten und in der Betriebsendlage von Isolierkörper-Wandteil (1.1) und Bürstentragplatte (1.2) über aus dem Isolierkörper-Wandteil (1.1) freistehende Kontaktbeine (4.1;5.1) einer ersten Kontaktebene mit Gegenkontakten (Stanzgitter 1.21) der Bürstentragplatte (1.2) kontaktiert sind.

2. Bürstensystem nach Anspruch 1, **gekennzeichnet durch** zumindest eine in axialem Abstand zur Bürstentragplatte (1.2) axial einfügbare und über Kontaktbeine (6.2-9.2) einer weiteren Kontaktebene des Isolierkörper-Wandteils (1.1) kontaktierbare Elektronik-Anschlußplatte (1.3).

3. Bürstensystem nach Anspruch 1 oder 2, **dadurch gekennzeichnet,** daß die Kontaktbeine (4.1;5.1 bzw.6.2-9.2) mit korrespondierenden Gegenkontakten eines in die vorzugsweise aus Kunststoff bestehende Bürstentragplatte (1.2) und/oder Elektronik-Anschlußplatte (1.3) eingespritzten Stanzgitters (1.21 bzw.1.31) kontaktiert sind.

4. Bürstensystem nach einem der Ansprüche 1-3, **gekennzeichnet durch** derart abgewinkelte Kontaktbeine (4.1;5.1 bzw.6.2-9.2), daß die korrespondierenden Gegenkontakte in Form von Kontaktbuchsen beim axialen Einfügen der Bürstentragplatte (1.2) bzw. der Elektronik-Anschlußplatte (1.3) auf die Kontaktbeine aufsteckbar sind.

5. Bürstensystem nach Anspruch 4, **dadurch gekennzeichnet,** daß die Kontaktbuchsen mit den eingesteckten Kontaktbeinen verlötet sind.

6. Bürstensystem nach einem der Ansprüche 1-5, **gekennzeichnet durch** aus dem Isolierkörper-Wandteil (1.1) herausragende Kontaktmittel (Steckerkontakte 4.3 bzw.4.4) zur Kontaktierung mit einem äußeren elektrischen Versorgungsanschluß.

7. Bürstensystem nach Anspruch 6, **dadurch gekennzeichnet,** daß die Steckerkontakte (4.2) aus dem Motorgehäuse (2.1) des Elektromotors (1) herausgeführt sind.

8. Bürstensystem für einen Kommutatormotor mit einem axial angeblockten Getriebegehäuse nach Anspruch 6, **dadurch gekennzeichnet,** daß die Steckerkontakte (4.3) innerhalb des Getriebegehäuses (3) hineinragen.

9. Bürstensystem nach Anspruch 7 oder 8, **gekennzeichnet durch** eine, vorzugsweise gespritzte, die Steckerkontakte (4.2 bzw.4.3) einschließende Dichtung (2.9).

10. Bürstensystem nach einem der Ansprüche 1-9, **dadurch gekennzeichnet,** daß das Isolierkörper-Wandteil (1.1), die Bürstentragplatte (1.2) und gegebenenfalls zumindest eine Elektronik-Platte (1.3) in der gleichen Axialrichtung relativ zu dem Isolierkörper (1) bzw. dem Isolierkörper-Wandteil (1.1) fügbar sind.

## Claims

1. Brush system for a commutator motor with a sleeve-shaped insulating body (1), which can be inserted axially into its motor housing (2.1), and a brush support plate (1.2) which is supported on the insulating body and can be inserted axially, with contact connections (4-9) at least between the brush attachments and external electrical supply attachments, characterized in that the contact connections (4-9) are supported in an insulating-body wall part (1.1), which can be inserted axially into a corresponding opening of the insulating body (1), and the contact connections (4-9) in the operating end position of the insulating-body wall part (1.1) and the brush support plate (1.2) are contacted with counter contacts (punched grid 1.21) of the brush support plate (1.2) by way of contact legs (4.1;5.1) of a first contact plane which are detached from the insulating-body wall part (1.1).

2. Brush system according to claim 1, characterized by at least one electronics attachment plate (1.3) which can be axially inserted with axial clearance from the brush support plate (1.2) and can be contacted by way of contact legs (6.2-9.2) of a further contact plane of the insulating-body wall part (1.1).

3. Brush system according to claim 1 or 2, characterized in that the contact legs (4.1;5.1 and 6.2-9.2) are contacted with corresponding counter contacts of a punched grid (1.21 and 1.31) injected into the brush support plate (1.2), preferably consisting of plastics, and/or injected into the electronics attachment plate (1.3).

4. Brush system according to one of claims 1-3, characterized by contact legs (4.1;5.1 and 6.2-9.2) which are bent in such a way that the corresponding counter contacts can be attached to the contact legs in the form of contact bushings upon the axial insertion of the brush support plate (1.2) and the electronics attachment plate (1.3).

5. Brush system according to claim 4, characterized in that the contact bushings are brazed with the inserted contact legs.

6. Brush system according to one of claims 1-5, characterized by contact means (plug contacts 4.3 and 4.4) projecting from the insulating-body wall part (1.1) for contacting with an external electrical supply attachment.

7. Brush system according to claim 6, characterized in that the plug contacts (4.2) are led out of the motor housing (2.1) of the electric motor (1).

8. Brush system for a commutator motor with a gearing housing blocked on axially according to claim 6, characterized in that the plug contacts (4.3) project into the gearing housing (3).

9. Brush system according to claim 7 or 8, characterized by a seal (2.9) enclosing the plug contacts (4.2 and 4.3) and preferably injected.

10. Brush system according to one of claims 1-9, characterized in that the insulating-body wall part (1.1), the brush support plate (1.2) and perhaps at least one electronics plate (1.3) can be joined in the same axial direction relative to the insulating body (1) and the insulating-body wall part (1.1).

## Revendications

1. Système de balais pour un moteur à collecteur comportant une douille isolante (1), qui peut être insérée axialement dans la carcasse (2.1) du moteur, et une plaque (1.2) porte-balais, qui y est fixée en pouvant y être insérée axialement et qui comporte des liaisons de contact (4 à 9) au moins entre les bornes des balais et des bornes extérieures d'alimentation électrique, caractérisé par le fait que les liaisons de contact (4 à 9) sont maintenues dans une pièce de paroi (1.1) de la douille isolante, qui peut être insérée axialement dans une découpe correspondante de la douille isolante (1), et, dans la position finale de fonctionnement de la pièce de paroi (1.1) de la douille isolante et de la plaque (1.2) porte-balais, sont en contact, par des pattes de contact (4.1; 5.1) d'un premier plan de contact, détachées de la pièce de paroi (1.1), avec des contacts antagonistes (grille estampée 1.21) de la plaque (1.2) porte-balais.

2. Système de balais suivant la revendication 1, caractérisé par au moins une plaque (1.3) de raccordement d'un système électronique, qui peut être insérée axialement à distance axiale de la plaque (1.2) porte-balais et qui peut être raccordée par l'intermédiaire de pattes de contact (6.2 à 9.2) d'un autre plan de contact de la pièce de paroi (1.1) de la douille isolante.

3. Système de balais suivant la revendication 1 ou 2, caractérisé par le fait que les pattes de contact (4.1; 5.1 ou 6.2 à 9.2) sont en contact avec des contacts antagonistes correspondants d'une grille estampée (1.21 ou 1.31), moulée par injection dans la plaque (1.2) porte-balais et/ou dans la plaque (1.3) de raccordement du système électronique, qui est de préférence en matière plastique.

4. Système de balais suivant l'une des revendications 1 à 3, caractérisé par des pattes de contact (4.1; 5.1 ou 6.2-9.2), coudées de sorte que les contacts antagonistes correspondants sous la forme de douille de contact peuvent être emmanchés sur les pattes de contact, lors de l'insertion axiale de la plaque (1.2) porte-balais ou de la plaque (1.3) de raccordement du système électronique.

5. Système de balais suivant la revendication 4, caractérisé par le fait que les douilles de contact sont fixées par brasage aux pattes de contact enfichées.

6. Système de balais suivant l'une des revendications 1-5, caractérisé par des moyens de contact (contacts de connecteur 4.3 ou 4.4), qui font saillie de la pièce de paroi (1.1) de la douille isolante et qui sont destinés à établir le contact avec une borne extérieure d'alimentation électrique.

7. Système de balais suivant la revendication 6, caractérisé par le fait que les contacts de connecteur (4.2) sortent de la carcasse (2.1) du moteur électrique (1).

8. Système de balais pour un moteur à collecteur ayant une boîte de transmission bloqué axialement suivant la revendication 6, caractérisé par le fait que les contacts de connecteur (4.3) pénètrent à l'intérieur de la boîte de transmission (3).

9. Système de balais suivant la revendication 7 ou 8, caractérisé par une garniture d'étanchéité (2.9), de préférence moulée par injection et qui entoure les contacts de connecteur (4.2 ou 4.3).

10. Système de balais suivant l'une des revendications 1-9, caractérisé par le fait que la pièce de paroi (1.1) de la douille isolante, la plaque (1.2) porte-balais et éventuellement au moins une plaque (1.3) portant un système électronique peuvent être assemblées dans la même direction axiale par rapport à la douille isolante (1) et à la pièce de paroi (1.1) de la douille isolante.
